# EUROPÄISCHE PATENTANMELDUNG

(11) **EP 3 879 313 A1**
(43) Veröffentlichungstag der Anmeldung: **15.09.2021**
(21) Anmeldenummer: 20162410.3
(22) Anmeldetag: 11.03.2020
(51) Int. Cl.: G02B 3/00, F21S 41/663, F21S 41/675, F21V 5/00

(54) **MIKROLINSENSYSTEM FÜR EINEN KRAFTFAHRZEUGSCHEINWERFER**

(71) Anmelder: ZKW Group GmbH, 3250 Wieselburg (AT)
(72) Erfinder: Hacker, Alexander, 3150 Wilhelmsburg (AT); Hölzl, Andreas, 3250 Wieselburg (AT); Knobloch, Christian, 3652 Leiben (AT)
(74) Vertreter: Patentanwaltskanzlei Matschnig & Forsthuber OG

(57) **Zusammenfassung**

Mikrolinsensystem (1) für einen Kraftfahrzeugscheinwerfer, umfassend ein Leuchtmittel (12) und eine Mikrolinsenvorrichtung (2), welche aus zumindest zwei Schichten aufgebaut ist, wobei eine erste Schicht (3) eine erste Lichteintrittsfläche (3b) und eine erste Lichtaustrittsfläche (3a) aufweist, welche aus einer Vielzahl von ersten Mikrolinsen (4) gebildet ist, wobei eine zweite Schicht (5) eine zweite Lichteintrittsfläche (5a), welche der ersten Lichtaustrittsfläche (3b) zugewandt ist, und eine zweite Lichtaustrittsfläche (5b) aufweist, wobei die zweite Lichteintrittsfläche (5a) aus einer Vielzahl von zweiten Mikrolinsen (6) gebildet ist, wobei die erste Schicht (3) ein Material mit einem ersten Brechungsindex und die zweite Schicht (5) ein Material mit einem zweiten Brechungsindex umfasst, wobei der erste und der zweite Brechungsindex verschieden sind, wobei zwischen dem Leuchtmittel (12) und der Mikrolinsenvorrichtung (2) ein optisches Element (11) dergestalt angeordnet und dazu eingerichtet ist, die von dem Leuchtmittel (12) radial abgestrahlten Lichtstrahlen derart zu brechen, dass die Lichtstrahlen nach dem Durchtritt durch das optische Element (11) parallel zueinander und parallel zu den optischen Achsen der ersten (4) und zweiten Mikrolinsen (6) der Mikrolinsenvorrichtung (2) orientiert sind.

## Beschreibung

Die Erfindung betrifft ein Mikrolinsensystem für einen Kraftfahrzeugscheinwerfer, umfassend ein Leuchtmittel zur Erzeugung und Abstrahlung von Licht, und eine Mikrolinsenvorrichtung, welche in Lichtausbreitungsrichtung nach dem Leuchtmittel angeordnet ist, wobei das Licht, wenn es auf die Mikrolinsenvorrichtung trifft, durch die Mikrolinsenvorrichtung durchtritt, wobei die Mikrolinsenvorrichtung dazu eingerichtet ist, das Licht abzustrahlen, wobei die Mikrolinsenvorrichtung aus zumindest zwei Schichten aufgebaut ist,
wobei eine erste Schicht eine erste Lichteintrittsfläche, welche dem Leuchtmittel zugewandt ist, und eine erste Lichtaustrittsfläche aufweist, welche aus einer Vielzahl von ersten Mikrolinsen gebildet ist, wobei die ersten Mikrolinsen dergestalt zueinander angeordnet sind, dass die optischen Achsen der ersten Mikrolinsen jeweils parallel zueinander orientiert sind,
wobei eine zweite Schicht eine zweite Lichteintrittsfläche, welche der ersten Lichtaustrittsfläche zugewandt ist, und eine zweite Lichtaustrittsfläche aufweist, wobei die zweite Lichteintrittsfläche aus einer Vielzahl von zweiten Mikrolinsen gebildet ist, wobei die zweiten Mikrolinsen dergestalt zueinander angeordnet sind, dass die optischen Achsen der ersten und zweiten Mikrolinsen jeweils parallel zueinander orientiert sind,
wobei die ersten Mikrolinsen konvex und die zweiten Mikrolinsen dazu korrespondierend konkav ausgebildet sind,
wobei die erste Lichtaustrittsfläche die zweite Lichteintrittsfläche derart vollflächig kontaktiert, dass jeweils eine konvexe Mikrolinse eine ihr gegenüberliegende konkave Mikrolinse vollflächig kontaktiert,
wobei die erste Schicht ein Material mit einem ersten Brechungsindex und die zweite Schicht ein Material mit einem zweiten Brechungsindex umfasst, wobei der erste und der zweite Brechungsindex verschieden sind.

Die Erfindung betrifft ferner einen Kraftfahrzeugscheinwerfer, umfassend ein Mikrolinsensystem.

Im Stand der Technik sind mehrschichtige Mikrolinsensystem bekannt. Nachteiligerweise treten bei derartigen geschichteten Mikrolinsensystem häufig unerwünschte Abbildungsfehler auf.

Die Aufgabe der vorliegenden Erfindung besteht darin, die Nachteile des Standes der Technik zu lindern bzw. zu beseitigen. Die Erfindung setzt sich daher insbesondere zum Ziel, ein Mikrolinsensystem zu schaffen, bei welchem Abbildungsfehler reduziert werden.

Diese Aufgabe wird durch ein Mikrolinsensystem mit den Merkmalen von Anspruch 1 gelöst. Bevorzugte Ausführungen sind in den abhängigen Ansprüchen angegeben.

Erfindungsgemäß ist zwischen dem Leuchtmittel und der Mikrolinsenvorrichtung ein optisches Element dergestalt angeordnet und dazu eingerichtet, die von dem Leuchtmittel radial abgestrahlten Lichtstrahlen derart zu brechen, dass die Lichtstrahlen nach dem Durchtritt durch das optische Element parallel zueinander und parallel zu den optischen Achsen der ersten und zweiten Mikrolinsen der Mikrolinsenvorrichtung orientiert sind.

Eine erste, konvexe Mikrolinse und eine zweite, konkave Mikrolinse, welche die erste Mikrolinse kontaktiert, bilden jeweils ein achromatisches Mikrolinsenpaar. Die optischen Achsen der ersten und zweiten Mikrolinsen sind insbesondere koaxial zueinander orientiert. Bei einem achromatischen Mikrolinsenpaar kann vorgesehen sein, dass eine konvexe Linsenlichtaustrittsfläche einer ersten Mikrolinse eine konkave Linsenlichteintrittsfläche einer zweiten Mikrolinse vollständig kontaktiert. Dadurch, dass die Lichtstrahlen, vor dem Auftreffen auf die Mikrolinsenvorrichtung, parallel zueinander und parallel zu den optischen Achsen der ersten und zweiten Mikrolinsen gerichtet werden, ergibt sich der Vorteil, dass ein Lichtstrahl nicht von einem achromatischen Mikrolinsenpaar in ein vertikal oder horizontal benachbartes achromatisches Mikrolinsenpaar übertreten kann. Dadurch kann eine Unschärfe in der durch die Mikrolinsen erzeugten Abbildung verhindert werden. Die ersten Mikrolinsen der ersten Schicht der Mikrolinsenvorrichtung sind insbesondere gleichartig ausgebildet. Damit können die ersten Mikrolinsen jeweils die gleichen optischen Eigenschaften aufweisen. Die zweiten Mikrolinsen können ebenfalls gleichartig ausgebildet sein, wobei die zweiten Mikrolinsen jeweils die gleichen optischen Eigenschaften aufweisen können. Die ersten und zweiten Mikrolinsen der Mikrolinsenvorrichtung sind insbesondere komplementär zueinander ausgebildet. Jede erste Mikrolinse kann mit einer der ersten Mikrolinse zugeordneten zweiten Mikrolinse formschlüssig verbunden sein. Vorzugsweise kontaktiert jede erste Mikrolinse genau eine zweite Mikrolinse abstandslos. Die Lichtaustrittsfläche der ersten Schicht kann derart ausgebildet sein, dass die ersten Mikrolinsen jeweils nahtlos bzw. direkt aneinander angrenzen. Die Lichtaustrittsfläche der ersten Schicht ist vorzugsweise dem Leuchtmittel abgewandt. Als Mikrolinsen können optische Linsen verstanden werden, welche konvex oder konkav ausgebildet sind, und vorzugsweise einen Durchmesser von beispielsweise 1, 2, 3, 4 oder 5 mm aufweisen. Die ersten und zweiten Mikrolinsen weisen insbesondere den gleichen Durchmesser auf. Eine erste Mikrolinse und eine an der ersten Mikrolinse anliegende zweite Mikrolinse bilden insbesondere einen Achromat aus. Die Mikrolinsenvorrichtung kann somit aus einer Vielzahl von in einem Raster angeordneten Achromaten gebildet sein.

Es kann vorgesehen sein, dass der erste Brechungsindex um 5 bis 10 %, vorzugsweise 7%, größer oder kleiner ist als der zweite Brechungsindex. Durch die unterschiedlichen Brechungsindizes der ersten und zweiten Mikrolinsen kann ein achromatisches Abbildungssystem ausgebildet werden. Vorteilhafterweise kann dadurch eine chromatische Aberration korrigiert werden.

Es kann vorgesehen sein, dass sich die ersten Mikrolinsen über die gesamte Fläche der ersten Lichtaustrittsfläche erstrecken. Die ersten Mikrolinsen sind vorzugsweise unmittelbar aneinander angrenzend und auf der gesamten Lichtaustrittsfläche in einem gleichmäßigen Raster zueinander angeordnet.

Es kann vorgesehen sein, dass sich die zweiten Mikrolinsen über die gesamte Fläche der zweiten Lichteintrittsfläche erstrecken. Insbesondere können die Anzahl und/oder der Durchmesser der ersten und zweiten Mikrolinsen gleich groß sein. Die zweiten Mikrolinsen sind vorzugsweise unmittelbar aneinander angrenzend und auf der gesamten Lichteintrittsfläche in einem gleichmäßigen Raster zueinander angeordnet.

Es kann vorgesehen sein, dass die ersten Mikrolinsen rasterförmig nebeneinander angeordnet sind. Mit anderen Worten, sind die einzelnen ersten Mikrolinsen matrixförmig nebeneinander angeordnet. Vorzugsweise grenzt dabei eine erste Mikrolinse unmittelbar an eine weitere erste Mikrolinse an, wobei insbesondere die gesamte Fläche der ersten Lichtaustrittsfläche vollständig durch nebeneinander liegende erste Mikrolinsen gebildet ist.

Es kann vorgesehen sein, dass die zweiten Mikrolinsen rasterförmig nebeneinander angeordnet sind. Mit anderen Worten, sind die einzelnen zweiten Mikrolinsen matrixförmige nebeneinander angeordnet. Vorzugsweise grenzt dabei eine zweite Mikrolinse unmittelbar an eine weitere zweite Mikrolinse an, wobei insbesondere die gesamte Fläche der zweiten Lichteintrittsfläche vollständig durch nebeneinander liegende zweite Mikrolinsen gebildet ist.

Es kann vorgesehen sein, dass die Anzahl der ersten und zweiten Mikrolinsen gleich ist.

Es kann vorgesehen sein, dass die ersten und zweiten Mikrolinsen derart zusammenwirken, dass jeweils ein Paar aus einer ersten und zweiten Mikrolinse einen Achromat bilden. Dadurch ergibt sich der Vorteil, dass die Mikrolinsenvorrichtung ein achromatisches Mikrolinsenarray bildet, wodurch chromatische Aberration kompensiert werden kann.

Es kann vorgesehen sein, dass die erste Lichteintrittsfläche eine weitere, dem Leuchtmittel zugewandte, Schicht aufweist, welche optisch transparent ausgebildet ist. Die weitere Schicht kann beispielsweise eine Substratschicht, welche Glas umfasst, sein, wobei die weitere Schicht als Wärmeisolierschicht für die erste Schicht ausgebildet sein kann. Vorzugsweise ist die weitere Schicht eben ausgebildet. Vorzugsweise weist die weitere Schicht eine Fläche auf, welche gleich groß der ersten Lichteintrittsfläche sein kann. Die Substratschicht ist insbesondere dergestalt ausgebildet, dass Licht durch die Substratschicht hindurch treten kann. Die Substratschicht ist vorzugsweise vollflächig und formschlüssig mit der ersten Lichteintrittsfläche verbunden.

Es kann vorgesehen sein, dass das Mikrolinsensystem einen Mikrospiegelaktor umfasst, wobei das Leuchtmittel Licht auf den Mikrospiegelaktor abstrahlt, wobei der Mikrospiegelaktor das Licht dergestalt umlenkt, dass das Licht nach der Umlenkung auf das optische Element trifft. Durch den Mikrospiegelaktor (DMD) kann das Licht ideal auf das optische Element umgelenkt werden, sodass möglichst der gesamte von der Lichtquelle ausgehende Lichtstrom verlustfrei auf das optische Element treffen kann.

Es kann vorgesehen sein, dass das optische Element als bikonvexe Linse ausgebildet ist. Die bikonvexe Linse ist insbesondere dazu eingerichtet, die Lichtstrahlen der Lichtquelle parallel zueinander und parallel zu den optischen Achsen der ersten und zweiten Mikrolinsen zu richten.

Es kann vorgesehen sein, dass das optische Element als asphärisch Linse ausgebildet ist. Die asphärische Linse ist insbesondere dazu eingerichtet, die Lichtstrahlen der Lichtquelle parallel zueinander und parallel zu den optischen Achsen der ersten und zweiten Mikrolinsen zu richten.

Es kann vorgesehen sein, dass die zweite Lichtaustrittsfläche eben ausgebildet ist. Die zweite Lichtaustrittsfläche ist insbesondere an jener Fläche der zweiten Schicht ausgebildet, welche der ersten Lichtaustrittsfläche abgewandt ist.

Es kann vorgesehen sein, dass an der zweiten Lichtaustrittsfläche eine optisch transparente Zusatzschicht aufgebracht ist. Die optisch transparente Zusatzschicht kann identisch zu der Substratschicht ausgebildet sein. Die optisch transparente Zusatzschicht kann insbesondere Glas umfassen oder aus Glas hergestellt sein.

Es kann vorgesehen sein, dass an der zweiten Lichtaustrittsfläche eine dritte Schicht aufgebracht ist, welche an einer der zweiten Lichtaustrittsfläche abgewandten Seite eine Vielzahl von dritten Mikrolinsen aufweist, wobei vorzugsweise die Anzahl der ersten, zweiten und dritten Mikrolinsen gleich ist. Es kann auch vorgesehen sein, dass eine optisch transparente Zusatzschicht auf der zweiten Lichtaustrittsfläche aufgebracht ist, und die dritte Schicht, welche die Vielzahl von dritten Mikrolinsen aufweist, kann auf der optisch transparenten Zusatzschicht aufgebracht sind.

Im Rahmen dieser Beschreibung sind die Begriffe "oben", "unten", "horizontal", "vertikal" als Angaben der Ausrichtung zu verstehen, wenn das Mikrolinsensystem in normaler Benutzungsstellung angeordnet ist.

Die Erfindung wird nachstehend anhand eines bevorzugten Ausführungsbeispiels, auf das sie jedoch nicht beschränkt sein soll, noch weiter erläutert. In den Zeichnungen zeigt:
- Fig. 1: einen Schichtaufbau einer Mikrolinsenvorrichtung eines Mikrolinsensystems;
- Fig. 2: die Mikrolinsenvorrichtung mit einem optischen Element;
- Fig. 3: eine schematisch Ansicht einer Ausführungsform des Mikrolinsensystems; und
- Fig. 4 und 5: weitere Ansichten der Mikrolinsenvorrichtung.

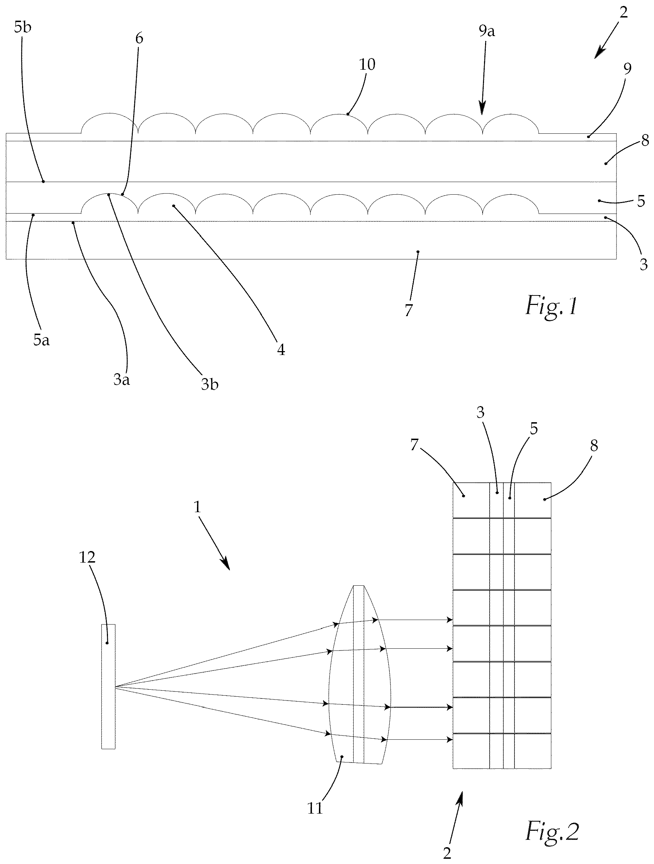

Fig. 1 zeigt eine Mikrolinsenvorrichtung 2 eines Mikrolinsensystems 1 für einen Kraftfahrzeugscheinwerfer. Die Mikrolinsenvorrichtung 2 umfasst eine erste Schicht 3 mit einer ersten Lichteintrittsfläche 3a und eine erste Lichtaustrittsfläche 3b. Die erste Lichtaustrittsfläche 3b ist aus einer Vielzahl von ersten Mikrolinsen 4 gebildet, wobei die ersten Mikrolinsen 4 dergestalt zueinander angeordnet sind, dass die optischen Achsen der ersten Mikrolinsen 4 jeweils parallel zueinander orientiert sind. An der ersten Schicht 3 ist eine zweite Schicht 5 mit einer zweiten Lichteintrittsfläche 5a, welche der ersten Lichtaustrittsfläche 3b zugewandt ist, angeordnet, wobei die zweite Schicht 5 eine zweite Lichtaustrittsfläche 5b aufweist. Die zweite Lichteintrittsfläche 5b ist aus einer Vielzahl von zweiten Mikrolinsen 6 gebildet, wobei die zweiten Mikrolinsen 6 dergestalt zueinander angeordnet sind, dass die optischen Achsen der ersten 4 und zweiten Mikrolinsen 6 jeweils parallel zueinander orientiert sind.

Die ersten Mikrolinsen 4 sind konvex und die zweiten Mikrolinsen 6 dazu korrespondierend konkav ausgebildet. Die erste Lichtaustrittsfläche 3b kontaktiert die zweite Lichteintrittsfläche 5a derart vollflächig, dass jeweils eine konvexe Mikrolinse 4 eine ihr gegenüberliegende konkave Mikrolinse 6 vollflächig kontaktiert, wobei jede erste 4 und zweite Mikrolinse 6 einen Achromat bilden. Dazu weist die erste Schicht 3 ein Material mit einem ersten Brechungsindex und die zweite Schicht 5 ein Material mit einem zweiten Brechungsindex auf, wobei der erste und der zweite Brechungsindex verschieden sind.

In dem in Fig. 1 gezeigten Ausführungsbeispiel weist die Mikrolinsenvorrichtung 2 an der ersten Lichteintrittsfläche 3a eine weitere, optionale, Schicht 7 auf, welche optisch transparent ausgebildet ist. Die weitere Schicht 7 ist vorzugweise aus Glas und dient als Wärmeisolierung für die erste Schicht 3. An der zweiten Lichtaustrittsfläche 5b ist eine (ebenfalls optionale) optisch transparente Zusatzschicht 8 aufgebracht. Auf der Zusatzschicht 8 ist eine (optionale) dritte Schicht 9 aufgebracht ist, welche eine dritte Lichtaustrittsfläche 9a aufweist, welche aus einer Vielzahl von dritten Mikrolinsen 10 gebildet ist. Die Anzahl der ersten 4, zweiten 6 und dritten Mikrolinsen 10 ist insbesondere gleich. Die weitere Schicht 7, die Zusatzschicht 8 und die dritte Schicht 9 sind jeweils optional. Es können jeweils nur eine, zwei oder drei dieser Schichten auf der Mikrolinsenvorrichtung 2 aufgebracht sein.

In Fig. 2 ist ein der Mikrolinsenvorrichtung 2 (welche in diesem Ausführungsbeispiel keine dritte Schicht 9 aufweist) vorgelagertes optisches Element 11 zu sehen, welches dergestalt angeordnet und dazu eingerichtet ist, die von einem Leuchtmittel 12 radial abgestrahlten Lichtstrahlen derart zu brechen, dass die Lichtstrahlen nach dem Durchtritt durch das optische Element 10 parallel zueinander und parallel zu den optischen Achsen der ersten 4 und zweiten Mikrolinsen 6 der Mikrolinsenvorrichtung 2 orientiert sind.

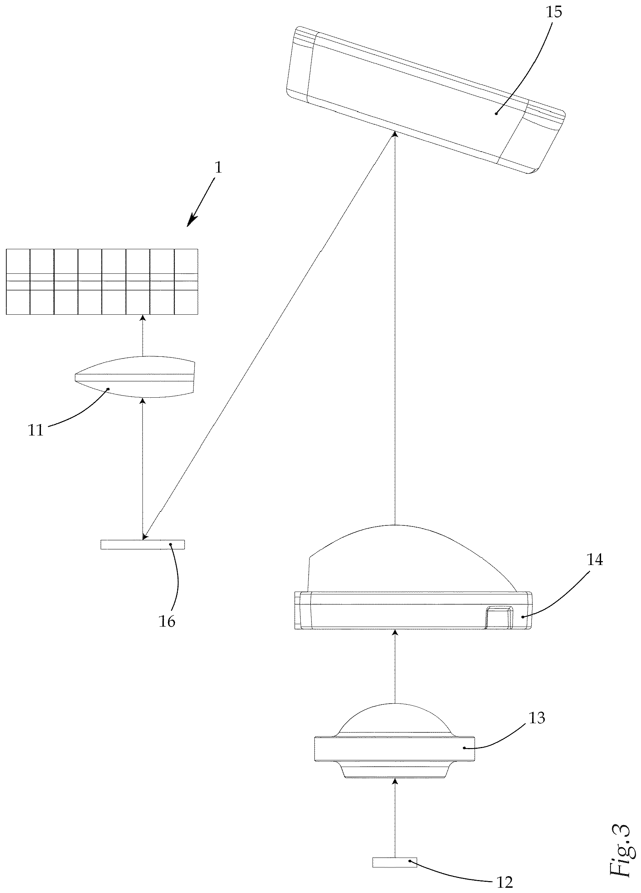

Fig. 3 zeigt ein Ausführungsbeispiel eines Mikrolinsensystems 1 umfassend ein Leuchtmittel 12 zur Erzeugung und Abstrahlung von Licht, zwei weitere (optionale) optische Elemente 13, 14, zwei (optionale) reflektierende Elemente 15, 16, das optische Element 11 und die Mikrolinsenvorrichtung 2. Das Licht, welches von dem Leuchtmittel 12 abgestrahlt wird, durchtritt die optischen Elementen 13, 14, welche eine bestimmte Lichtverteilung bilden, wobei das Licht in weiterer Folge von dem ersten 15 und zweiten reflektierenden Element 16 auf das optische Element 11 umgelenkt wird. Nachdem das Licht durch das optische Element 11 durchgetreten und dabei parallelisiert wurde, trifft das Licht auf die Mikrolinsenvorrichtung 2.

Das erste 15 und/oder zweite reflektierende Element 16 kann ein Mikrospiegelaktor (DMD) oder eine reflektierende Fläche sein. Als Leuchtmittel kann eine LED, eine LED Anordnung, beispielsweise eine µ-matrix LED, ein LCD Array o.Ä. vorgesehen sein.

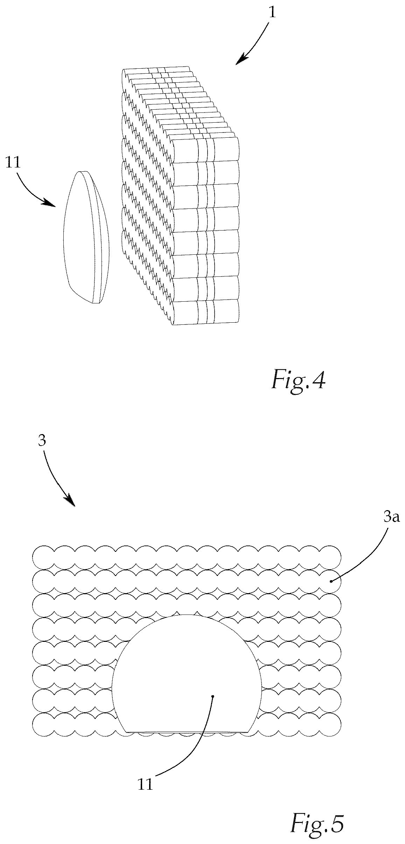

In Fig. 4 ist eine perspektivische Ansicht der Mikrolinsenvorrichtung 2 gemäß Fig. 2 gezeigt. Das optische Element 11 ist in dieser Ausführungsform eine bikonvexe Linse.

Fig. 5 zeigt eine Rückansicht auf die erste Schicht 3 der Mikrolinsenvorrichtung 2 mit dem vorgelagerten optischen Element 11. Die optisch aktive Fläche des optischen Elements 11 ist in dem gezeigten Ausführungsbeispiel kleiner als die Lichteintrittsfläche 3a der ersten Schicht 3 der Mikrolinsenvorrichtung 2.

## Patentansprüche

1. Mikrolinsensystem (1) für einen Kraftfahrzeugscheinwerfer, umfassend ein Leuchtmittel (12) zur Erzeugung und Abstrahlung von Licht, und eine Mikrolinsenvorrichtung (2), welche in Lichtausbreitungsrichtung nach dem Leuchtmittel (12) angeordnet ist, wobei das Licht, wenn es auf die Mikrolinsenvorrichtung (2) trifft, durch die Mikrolinsenvorrichtung (2) durchtritt, wobei die Mikrolinsenvorrichtung (2) dazu eingerichtet ist, das Licht abzustrahlen, wobei die Mikrolinsenvorrichtung (2) aus zumindest zwei Schichten aufgebaut ist,
wobei eine erste Schicht (3) eine erste Lichteintrittsfläche (3b), welche dem Leuchtmittel (12) zugewandt ist, und eine erste Lichtaustrittsfläche (3a) aufweist, welche aus einer Vielzahl von ersten Mikrolinsen (4) gebildet ist, wobei die ersten Mikrolinsen (4) dergestalt zueinander angeordnet sind, dass die optischen Achsen der ersten Mikrolinsen (4) jeweils parallel zueinander orientiert sind,
wobei eine zweite Schicht (5) eine zweite Lichteintrittsfläche (5a), welche der ersten Lichtaustrittsfläche (3b) zugewandt ist, und eine zweite Lichtaustrittsfläche (5b) aufweist, wobei die zweite Lichteintrittsfläche (5a) aus einer Vielzahl von zweiten Mikrolinsen (6) gebildet ist, wobei die zweiten Mikrolinsen (6) dergestalt zueinander angeordnet sind, dass die optischen Achsen der ersten (4) und zweiten Mikrolinsen (6) jeweils parallel zueinander orientiert sind,
wobei die ersten Mikrolinsen (4) konvex und die zweiten Mikrolinsen (6) dazu korrespondierend konkav ausgebildet sind,
wobei die erste Lichtaustrittsfläche (3b) die zweite Lichteintrittsfläche (5a) derart vollflächig kontaktiert, dass jeweils eine konvexe Mikrolinse (4) eine ihr gegenüberliegende konkave Mikrolinse (6) vollflächig kontaktiert,
wobei die erste Schicht (3) ein Material mit einem ersten Brechungsindex und die zweite Schicht (5) ein Material mit einem zweiten Brechungsindex umfasst, wobei der erste und der zweite Brechungsindex verschieden sind,
**dadurch gekennzeichnet, dass**
zwischen dem Leuchtmittel (12) und der Mikrolinsenvorrichtung (2) ein optisches Element (11) dergestalt angeordnet und dazu eingerichtet ist, die von dem Leuchtmittel (12) radial abgestrahlten Lichtstrahlen derart zu brechen, dass die Lichtstrahlen nach dem Durchtritt durch das optische Element (11) parallel zueinander und parallel zu den optischen Achsen der ersten (4) und zweiten Mikrolinsen (6) der Mikrolinsenvorrichtung (2) orientiert sind.

2. Mikrolinsensystem (1) nach Anspruch 1, wobei der erste Brechungsindex um 5% bis 10%, vorzugsweise 7%, größer oder kleiner ist als der zweite Brechungsindex.

3. Mikrolinsensystem (1) nach einem der vorhergehenden Ansprüche, wobei sich die ersten Mikrolinsen (4) über die gesamte Fläche der ersten Lichtaustrittsfläche (3b) erstrecken.

4. Mikrolinsensystem (1) nach einem der vorhergehenden Ansprüche, wobei sich die zweiten Mikrolinsen (6) über die gesamte Fläche der zweiten Lichteintrittsfläche (5a) erstrecken.

5. Mikrolinsensystem (1) nach einem der vorhergehenden Ansprüche, wobei die ersten Mikrolinsen (4) rasterförmig nebeneinander angeordnet sind.

6. Mikrolinsensystem (1) nach einem der vorhergehenden Ansprüche, wobei die zweiten Mikrolinsen (6) rasterförmig nebeneinander angeordnet sind.

7. Mikrolinsensystem (1) nach einem der vorhergehenden Ansprüche, wobei die Anzahl der ersten (4) und zweiten Mikrolinsen (6) gleich ist.

8. Mikrolinsensystem (1) nach einem der vorhergehenden Ansprüche, wobei die ersten (4) und zweiten Mikrolinsen (6) derart zusammenwirken, dass jeweils ein Paar aus einer ersten (4) und zweiten Mikrolinse (6) einen Achromat bilden.

9. Mikrolinsensystem (1) nach einem der vorhergehenden Ansprüche, wobei die erste Lichteintrittsfläche (3a) eine weitere, dem Leuchtmittel zugewandte, Schicht (7) aufweist, welche optisch transparent ausgebildet ist.

10. Mikrolinsensystem (1) nach einem der vorhergehenden Ansprüche, umfassend einen Mikrospiegelaktor (16), wobei das Leuchtmittel (12) Licht auf den Mikrospiegelaktor (16) abstrahlt, wobei der Mikrospiegelaktor (16) das Licht dergestalt umlenkt, dass das Licht nach der Umlenkung auf das optische Element (11) trifft.

11. Mikrolinsensystem (1) nach einem der vorhergehenden Ansprüche, wobei das optische Element (11) als bikonvexe Linse oder als asphärisch Linse ausgebildet ist.

12. Mikrolinsensystem (1) einem der vorhergehenden Ansprüche, wobei die zweite Lichtaustrittsfläche (5b) eben ausgebildet ist.

13. Mikrolinsensystem (1) einem der vorhergehenden Ansprüche, wobei an der zweiten Lichtaustrittsfläche (5b) eine optisch transparente Zusatzschicht (8) aufgebracht ist.

14. Mikrolinsensystem (1) einem der vorhergehenden Ansprüche, wobei an der zweiten Lichtaustrittsfläche (5b) eine dritte Schicht (9) aufgebracht ist, welche an einer der zweiten Lichtaustrittsfläche (5b) abgewandten Seite eine Vielzahl von dritten Mikrolinsen (10) aufweist, wobei vorzugsweise die Anzahl der ersten (4), zweiten (6) und dritten Mikrolinsen (10) gleich ist.

15. Kraftfahrzeugscheinwerfer, umfassend ein Mikrolinsensystem (1) einem der Ansprüche 1 bis 14.
